# EUROPEAN PATENT APPLICATION

(11) **EP 3 515 121 A1**
(43) Date of publication of application: **24.07.2019**
(21) Application number: 16916035.5
(22) Date of filing: 18.09.2016
(51) Int. Cl.: H04W 48/08, H04W 48/16

(54) **DEVICE NETWORKING METHOD, APPARATUS AND SYSTEM**

(71) Applicant: Midea Smart Technology Co.,Ltd., Foshan, Guangdong 528311 (CN); Midea Group Co., Ltd., Foshan, Guangdong 528311 (CN)
(72) Inventor: LU, Weishan, Foshan Guangdong 528311 (CN)
(74) Representative: Lam, Alvin
(86) International application number: PCT/CN2016/099251
(87) International publication number: WO 2018/049655

(57) **Abstract**

Disclosed are a device networking method, apparatus and system. The method comprises: monitoring each pre-set channel, and sending a networking request message of a first device to be connected to a target router in each channel, wherein the networking request message comprises a first device identifier of the first device; acquiring, from a target channel, a networking response message carrying the first device identifier and sent by a second device connected to the target router, wherein the networking response message comprises a service set identifier and a password of the target router; and sending a received reply message to the second device, and controlling the first device to be connected to the target router via the target channel according to the service set identifier and the password. In this way, a service set identifier and a password of a relevant router are acquired from a device connected to a relevant server, so that the efficiency of device networking is improved.

## Description

### FIELD

The present disclosure relates to a field of smart home technology, and more particularly, to a device networking method, an apparatus and a system.

### BACKGROUND

With the popularity of smart home, more and more household devices (such as air conditioners and refrigerators) are equipped with wireless communication modules. Thus, when a device is connected to a router, it can be viewed and controlled at the side of a mobile terminal (such as a smart phone).

When the device is connected to the router, a service set identifier of the router and the like may be required. However, since most devices commonly used in home do not have a display screen or other input receiving devices, there is no way to directly input the service set identifier and a password of the router in the device, as mobile terminals such as mobile phones do. Thus, how to send the service set identifier of the relevant router to the router became an urgent problem to be solved.

### SUMMARY

Embodiments of the present disclosure aim to solve at least one of the technical solutions in the related art.

Accordingly, a first objective of the present disclosure is to provide a device networking method. With the method, a service set identifier and a password of the relevant router are acquired from the device that has been connected to the relevant server, thereby improving the efficiency of the device networking.

A second objective of the present disclosure is to provide another device networking method.

A third objective of the present disclosure is to provide a device networking apparatus.

A fourth objective of the present disclosure is to provide another device networking apparatus.

A fifth objective of the present disclosure is to provide a device networking system.

In order to achieve the above objectives, embodiments of a first aspect of the present disclosure propose a device networking method, including: monitoring each pre-set channel, and sending a networking request message of a first device to be connected to a target router in each channel, in which the networking request message includes a first device identifier of the first device; acquiring, from a target channel, a networking response message carrying the first device identifier and sent by a second device connected to the target router, in which the networking response message includes a service set identifier and a password of the target router; and sending a receiving reply message to the second device, and controlling the first device to be connected to the target router via the target channel according to the service set identifier and the password.

With the device networking method according to embodiments of the present disclosure, each pre-set channel is monitor, and a networking request message of a first device to be connected to a target router is sent in each channel, in which the networking request message includes a first device identifier of the first device, and a networking response message carrying the first device identifier and sent by a second device connected to the target router are acquired from a target channel, in which the networking response message includes a service set identifier and a password of the target router, and a receiving reply message is sent to the second device, and the first device is controlled to be connected to the target router via the target channel according to the service set identifier and the password. Therefore, the service set identifier and the password of the relevant router may be acquired from the device that has been connected to the relevant server, thereby simplifying the steps of the device networking and improving the efficiency of the device networking.

In addition, the device networking method of embodiments of the present disclosure also has the following additional technical characteristics.

Optionally, monitoring each pre-set channel, and sending the networking request message of the first device to be connected to the target router in each channel includes: monitoring each channel for a duration T, and sending the networking request message of the first device to be connected to the target router in each channel N times within the duration T.

In order to achieve the above objectives, embodiments of a second aspect of the present disclosure propose a device networking method, including: after a second device is connected to a target router via a target channel, monitoring whether a networking request message sent by a first device to be connected to the target router is acquired from the target channel; if the networking request message is obtained from the target channel, parsing the networking request message and obtaining a first device identifier of the first device; sending a networking response message carrying the first device identifier to the first device from the target channel, in which the networking response message includes: a service set identifier and a password of the target router, such that the first device is caused to be connected to the target router via the target channel according to the service set identifier and the password.

With the device networking method according to embodiments of the present disclosure, after a second device is connected to a target router via a target channel, it is monitored whether a networking request message sent by a first device to be connected to the target router is obtained from the target channel, if the networking request message is obtained from the target channel, parsing the networking request message and obtains a first device identifier of the first device, and a networking response message carrying the first device identifier is sent to the first device from the target channel, in which the networking response message includes a service set identifier and a password of the target router, such that the first device is caused to be connected to the target router via the target channel according to the service set identifier and the password. Therefore, the service set identifier and the password of the relevant router may be sent to the device to be networked based on the device that has been connected to the relevant server, thereby improving the efficiency of the device networking.

In addition, the device networking method of embodiments of the present disclosure also has the following additional technical characteristics.

Optionally, sending the networking response message carrying the first device identifier to the first device from the target channel includes: sending the networking response message carrying the first device identifier to the first device from the target channel according to a preset period, and stopping sending the networking response message until a receiving reply message sent by the first device is received.

Optionally, before sending the networking response message carrying the first device identifier to the first device from the target channel, the method further includes: sending a verification request message carrying the first device identifier to a preset application platform, such that the application platform is caused to verify legitimacy of a device corresponding to the first device identifier according to pre-stored registration information; and determining whether to send the networking response message carrying the first device identifier from the target channel to the first device according to a verification result fed back by the application platform.

In order to achieve the above objectives, embodiments of a third aspect of the present disclosure propose a device networking apparatus, including: a first sending module, configured to monitor each pre-set channel, and to send a networking request message of a first device to be connected to a target router in each channel, in which the networking request message includes a first device identifier of the first device; an acquiring module, configured to acquire, from a target channel, a networking response message carrying the first device identifier and sent by a second device connected to the target router, in which the networking response message comprises a service set identifier and a password of the target router; a responding module, configured to send a receiving reply message to the second device, and to control the first device to be connected to the target router via the target channel according to the service set identifier and the password.

With the device networking apparatus according to embodiments of the present disclosure, each pre-set channel is monitored, and a networking request message of a first device to be connected to a target router is sent in each channel, in which the networking request message includes a first device identifier of the first device, and a networking response message carrying the first device identifier and sent by a second device connected to the target router is acquired from a target channel, in which the networking response message includes a service set identifier and a password of the target router, and a receiving reply message is sent to the second device, and the first device is controlled to be connected to the target router via the target channel according to the service set identifier and the password. Therefore, the service set identifier and the password of the relevant router are acquired from the device that has been connected to the relevant server, thereby simplifying the steps of the device networking and improving the efficiency of the device networking.

In addition, the device networking apparatus of embodiments of the present disclosure also has the following additional technical characteristics.

Optionally, the first sending module is configured to monitor each channel for a duration T, and send the networking request message of the first device to be connected to the target router in each channel N times within the duration T.

In order to achieve the above objectives, embodiments of a fourth aspect of the present disclosure propose a device networking apparatus, including: a monitoring module, configured to monitor, after a second device is connected to a target router via a target channel, whether a networking request message sent by a first device to be connected to the target router is obtained from the target channel; a parsing module, configured to parse, if the networking request message is obtained from the target channel, the networking request message and to obtain a first device identifier of the first device; a second sending module, configured to send a networking response message carrying the first device identifier to the first device from the target channel, in which the networking response message includes: a service set identifier and a password of the target router, such that the first device is caused to be connected to the target router via the target channel according to the service set identifier and the password.

With the device networking apparatus according to embodiments of the present disclosure, after a second device is connected to a target router via a target channel, it is monitored whether a networking request message sent by a first device to be connected to the target router is obtained from the target channel, if the networking request message is obtained from the target channel, the networking request message is parsed and the first device identifier of the first device is acquired, and the networking response message carrying the first device identifier is set to the first device from the target channel, in which the networking response message includes the service set identifier and the password of the target router, such that the first device is caused to be connected to the target router via the target channel according to the service set identifier and the password. Therefore, the service set identifier and the password of the relevant router may be sent to the device to be networked based on the device that has been connected to the relevant server, thereby improving the efficiency of the device networking.

In addition, the device networking apparatus of embodiments of the present disclosure also has the following additional technical features.

Optionally, the second sending module is configured to send the networking response message carrying the first device identifier to the first device from the target channel according to a preset period, and to stop sending the networking response message until a receiving reply message sent by the first device is received.

Optionally, the device networking apparatus also includes a third sending module, configured to send a verification request message carrying the first device identifier to a preset application platform, such that the application platform is caused to verify legitimacy of a device corresponding to the first device identifier according to pre-stored registration information; a determining module, configured to determine whether to send the networking response message carrying the first device identifier from the target channel to the first device according to a verification result fed back by the application platform.

In order to achieve the above objectives, embodiments of a fifth aspect of the present disclosure propose a device networking system, including the device networking apparatus of the third aspect of the present disclosure, the device networking apparatus of the fourth aspect of the present disclosure, and a target router.

With the device networking system according to embodiments of the present disclosure, each pre-set channel is monitored, and a networking request message of a first device to be connected to a target router is sent in each channel, in which the networking request message includes a first device identifier of the first device, and a networking response message carrying the first device identifier and sent by a second device connected to the target router is acquired from a target channel, in which the networking response message includes a service set identifier and a password of the target router, and a receiving reply message is sent to the second device, and the first device is controlled to be connected to the target router via the target channel according to the service set identifier and the password. Therefore, the service set identifier and the password of the relevant router may be acquired from the device that has been connected to the relevant server, thereby simplifying the steps of the device networking and improving the efficiency of the device networking.

Additional aspects and advantages of embodiments of the present disclosure will be given in part in the following descriptions, become apparent in part from the following descriptions, or be learned from the practice of the embodiments of the present disclosure.

### BRIEF DESCRIPTION OF THE DRAWINGS

Fig. 1 is a flow chart of a device networking method according to an embodiment of the present disclosure;
Fig. 2 is a flow chart of a device networking method according to another embodiment of the present disclosure;
Fig. 3 is a flow chart of a device networking method according to yet another embodiment of the present disclosure;
Fig. 4 is a block diagram of a device networking apparatus according to an embodiment of the present disclosure;
Fig. 5 is a block diagram of a device networking apparatus according to another embodiment of the present disclosure;
Fig. 6 is a block diagram of a device networking apparatus according to yet another embodiment of the present disclosure;
Fig. 7 is a block diagram of a device networking system according to an embodiment of the present disclosure; and
Fig. 8 is a flow chart of an implementation of a device networking system according to an embodiment of the present disclosure.

### DETAILED DESCRIPTION

Embodiments of the present disclosure will be described in detail below. Examples of the embodiments of the present disclosure will be shown in the drawings, in which the same or similar elements and the elements having same or similar functions are denoted by same or similar reference numerals throughout the descriptions. Embodiments described herein with reference to the drawings are exemplary, serve to explain the present disclosure, and are not construed to limit the present disclosure.

The device networking method, apparatus and system according to embodiments of the present disclosure will be described below with reference to the accompanying drawings.

Generally speaking, in order to send a service set identifier and a password of a relevant router to a device, a LAN is established with the device as a hotspot, such that a mobile terminal is used as a STA (Station, a wireless client) to be connected with the device, and the service set identifier and the password of the router are sent to the device through the mobile terminal, such that the device can actively connect to the router according to the received service set identifier and the password of the router.

However, in the above way of connecting the device to the router, the mobile terminal must disconnect from the original connection with the router, and after providing the device with the service set identifier and the password of the router, it needs to reconnect to the router, which is tedious and inefficient.

In order to solve the above problems, the present disclosure proposes a device networking method, in which a service set identifier and a password of a relevant router may be sent to a device to be networked based on information interaction between devices, which may avoid the disconnection between a mobile terminal and the router, thereby simplifying the steps of the device networking and improving the efficiency of the device networking.

In order to facilitate the description, the following description focuses on the side of the device to be networked.

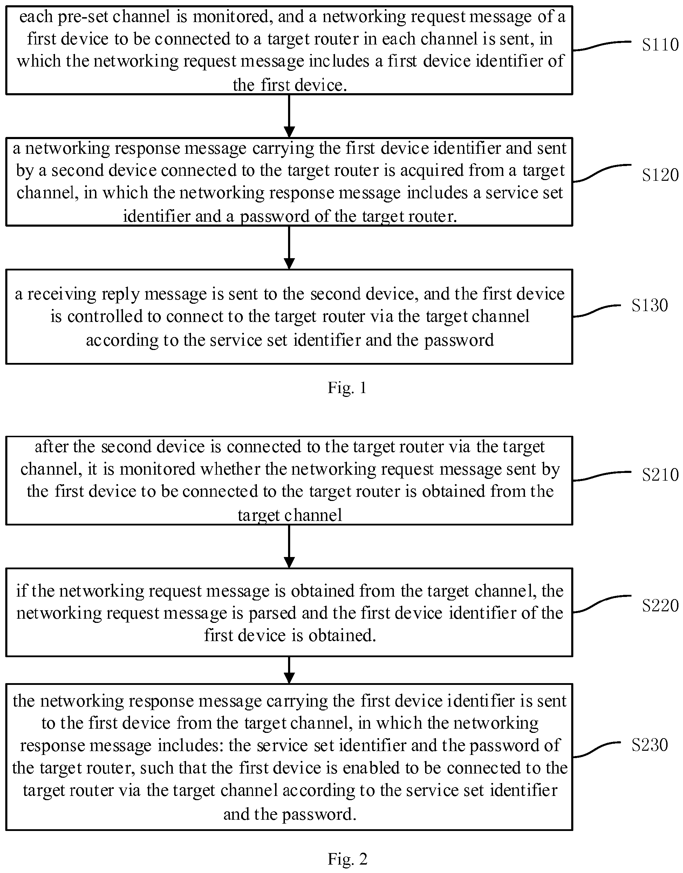

Fig. 1 is a flow chart of a device networking method according to an embodiment of the present disclosure. As illustrated in Fig. 1, the method includes followings.

At block S110, each pre-set channel is monitored, and a networking request message of a first device to be connected to a target router is sent in each channel, in which the networking request message includes a first device identifier of the first device.

It can be understood that, in order to enable the router to transmit the received data packet to a target network or a target host and the like, the corresponding protocol may be selected for the router in advance, that is, the corresponding provisions and standards are appointed in advance for the router in the process of the router transmitting the data packet.

The working channels of the router are different depending on the adopted protocols. For example, if the protocol adopted for the router is 802.11b, its working channel is one of the 11 channels in the 2.4-GHz-ISM frequency band, and if the protocol adopted for the router is 802.11 g, its working channel is one of the 11 channels in the 2.4 GHz and 5 GHz frequency bands, and the like, in which the device connected to the router is on the channel where the router works.

Specifically, since it is unknown which channel under the corresponding routing protocol the router works on, in order to send relevant information to the device connected to the router, each channel corresponding to the protocol adopted for the target router is monitored and the networking request message of the first device to be connected to the target router is sent in each channel.

The first device may be a household appliance and other common devices, the target router mentioned above is the corresponding router for networking the first device, and the networking request message includes a device identifier that identifies the first device as unique, such as a device number of the first device etc.

It should be noted that, when the specific application scenarios are different, the ways of sending the networking request of the first device connected to the target router on each channel may be different, which will be illustrated as follows.

In a first example, each channel may be monitored simultaneously for a certain period of time, and the networking request message of the first device connected to the target router may be sent several times during the period of time.

For example, in this example, each channel is monitored for a duration T, and the networking request message of the first device to be connected to the target router is sent in each channel N times within the duration T.

In a second example, each channel may be monitored separately for a certain period of time, and the networking request message of the first device connected to the target router may be sent several times during the period of time. This process is repeated until the networking request message of the first device connected to the target router is sent several times in the period of time on each channel.

In a third example, a commonly used channel may be determined according to the protocol adopted for the target router. The commonly used channel is monitored for a long period of time, and the networking request message is sent to the first device connected to the target router several times at a high frequency, while the less commonly used channel is monitored for a short period of time, and the networking request message is sent to the first device connected to the target router several times at a low frequency.

At block S120, a networking response message carrying the first device identifier and sent by a second device connected to the target router is acquired from a target channel, in which the networking response message includes a service set identifier and a password of the target router.

It can be understood that, the second device that is already connected to the target router holds the service set identifier and the password and the like which are used for connecting to the target router. When the second device receives the wireless networking request sent by the first device, the second device may provide the first device with the service set identifier and the password for connecting to the target router, so as to realize the networking of the first device

Specifically, the networking response message carrying the first device identifier sent by the second device is acquired from the target channel where the second device connected to the target router works on, in which, the networking message includes the service set identifier and the password of the target router.

At block S130, a receiving reply message is sent to the second device, and the first device is controlled to be connected to the target router via the target channel according to the service set identifier and the password.

Specifically, in order to avoid the second device repeatedly responding to the networking request message sent by the first device several times, after receiving the networking request message carrying the first device identifier sent by the second device, the received reply message is sent to the second device.

Furthermore, the first device is controlled to connect to the target router via the target channel according to the service set identifier and the password, thereby realizing the networking of the first device.

Thus, there is no need to change the state of the connection between the device connected to the router and the target router. Since the device connected to the target router has already acquired the service set identifier and the password etc. of the target router, the connection information of the target router is provided to the device to be networked through the device that has been connected to the target router, and the device is networked according to the connection information of the target router.

Therefore, the device to be networked acquires the service set identifier and the password etc. of the target router from the device that has been networked via the information interaction between devices, which may avoid tedious operation steps such as disconnecting the mobile terminal from the target router when the mobile terminal sends the service set identifier and the password of the target router to the device, thereby improving the efficiency of device networking.

In conclusion, with the device networking method according to embodiments of the present disclosure, each pre-set channel is monitor, and a networking request message of a first device to be connected to a target router is sent in each channel, in which the networking request message includes a first device identifier of the first device, and a networking response message carrying the first device identifier and sent by a second device connected to the target router are acquired from a target channel, in which the networking response message includes a service set identifier and a password of the target router, and a receiving reply message is sent to the second device, and the first device is controlled to be connected to the target router via the target channel according to the service set identifier and the password. Therefore, the service set identifier and the password of the relevant router may be acquired from the device that has been connected to the relevant server, thereby simplifying the steps of the device networking and improving the efficiency of the device networking.

The following description focuses on the side of the device that has been connected to the target router.

Fig. 2 is a flow chart of a device networking method according to another embodiment of the present disclosure. As illustrated in Fig. 2, the method includes followings.

At block S210, after a second device is connected to a target router via the target channel, it is monitored whether a networking request message sent by a first device to be connected to the target router is obtained from the target channel.

It can be understood that, the successful connection between any device and the target router via the target channel is based on acquiring the service set identifier and the password of the target server. Thus, the device to be networked may obtain the service set identifier and the password of the target server from the device connected with the target server.

Specifically, after the second device is connected to the target router via the target channel, in order to determine whether there is a first device intended to connect to the target server, it is monitored whether the networking request message sent by the first device to be connected to the target router is obtained from the target channel.

At block S220, if the networking request message is obtained from the target channel, the networking request message is parsed and a first device identifier of the first device is obtained.

At block S230, a networking response message carrying the first device identifier is sent to the first device from the target channel, in which the networking response message includes: a service set identifier and a password of the target router, such that the first device is caused to be connected to the target router via the target channel according to the service set identifier and the password.

Specifically, the second device may send a variety of data packets via the target channel, in order to enable the first device accurately receiving the networking response message sent by the second device, after the second device acquires the networking request message from the target channel, the networking request message is parsed to obtain the first device identifier of the first device.

Furthermore, the networking response message carrying the first device identifier is sent from the target channel to the first device, the first device may identify the networking response message via the first device identifier, so as to connect with the target router via the target channel according to the service set identifier and the password of the target router in the networking response message.

It should be noted that, according to different application scenarios, the second device sends the networking response message carrying the first device identifier from the target channel to the first device in different ways.

In a first example, in order to ensure that the first device may receive the networking response message, the networking response message carrying the first device identifier is sent to the first device from the target channel according to a preset period, and the networking response message is stopped being sent until the receiving reply message sent by the first device is received.

For example, in this example, the networking response message carrying the first device identifier is sent to the first device from the target channel every 5 ms, and sending the networking response message is stopped until the receiving reply message sent by the first device is received.

In a second example, in order to reduce the pressure on the second device, the second device may send the networking response message carrying the first device identifier to a cloud server, such that the networking response message carrying the first device identifier is sent to the first device via the cloud server, and the networking response message is stopped being sent by the cloud server until the receiving reply message sent by the first device is received by the cloud server.

Thus, there is no need to change the state of the connection between the device connected to the router and the target router. Since the device connected to the target router has already acquired the service set identifier and the password etc. of the target router, the connection information of the target router is provided to the device to be networked via the device that has been connected to the target router, and the device is networked according to the connection information of the target router.

Therefore, the device to be networked acquires the service set identifier and the password etc. of the target router from the device that has been networked via the information interaction between devices, which can avoid tedious operation steps such as disconnecting the mobile terminal from the target router when the mobile terminal sends the service set identifier and the password of the target router to the device, thereby improving the efficiency of device networking.

In conclusion, with the device networking method according to embodiments of the present disclosure, after a second device is connected to a target router via a target channel, it is monitored whether a networking request message sent by a first device to be connected to the target router is obtained from the target channel, if the networking request message is obtained from the target channel, parsing the networking request message and obtains a first device identifier of the first device, and a networking response message carrying the first device identifier is sent to the first device from the target channel, in which the networking response message includes a service set identifier and a password of the target router, such that the first device is caused to be connected to the target router via the target channel according to the service set identifier and the password. Therefore, the service set identifier and the password of the relevant router may be sent to the device to be networked based on the device that has been connected to the relevant server, thereby improving the efficiency of the device networking.

It should be appreciated that, according to the above embodiments, the second device does not send the networking response message to all networking requests. For example, if the service set identifier and the password of the target server sent to some unregistered illegal devices which are then connected to the target server, it may cause damage to the network security of the router, or there is no way to identify relevant instructions, leading to the function of the smart home not being achieved and causing a waste of resources or other problems.

Therefore, in order to further improve the efficiency of networking and protect the network security of the router, before the second device sends the networking response message carrying the identifier of the first device from the target channel to the first device, the legitimacy of the first device needs to be verified.

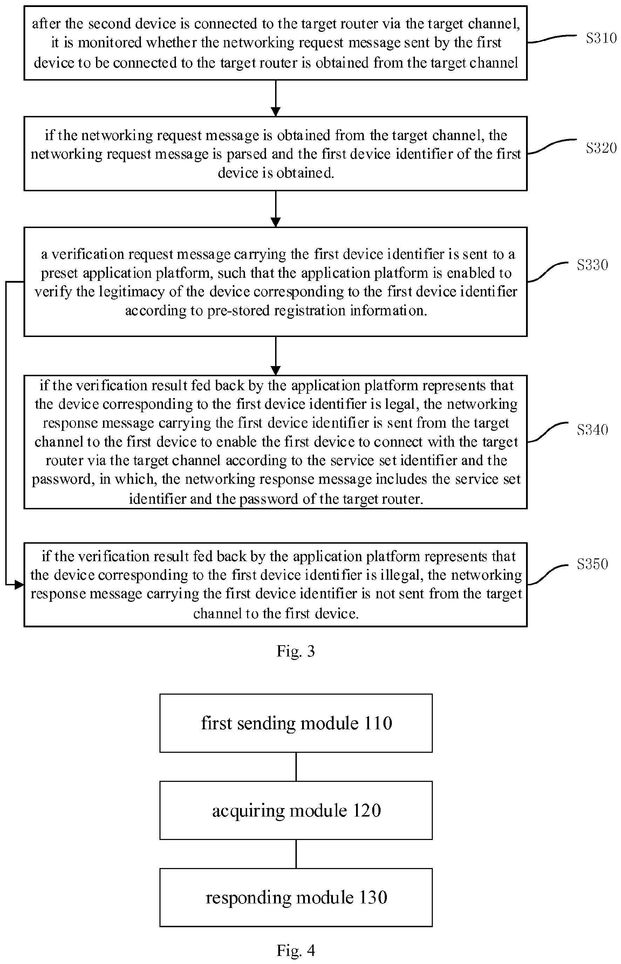

Fig. 3 is a flow chart of a device networking method according to yet another embodiment of the present disclosure. As illustrated in Fig. 3, the device networking method includes followings.

At block S310, after a second device connecting to a target router via a target channel, it is monitored whether the networking request message sent by the first device to be connected to the target router is obtained from the target channel.

At block S320, if the networking request message is obtained from the target channel, the networking request message is parsed and the first device identifier of the first device is obtained.

It should be noted that, the above description of acts at blocks S210 to S220 corresponds to the description of acts at blocks S310 to S320 in this embodiment, which will not be elaborated in detail herein.

At block S330, a verification request message carrying the first device identifier is sent to a preset application platform, such that the application platform is caused to verify the legitimacy of a device corresponding to the first device identifier according to pre-stored registration information.

It can be understood that, the registration information of relevant devices is stored in the preset application platform, the registration information may include the device identifier of the registered device, and the like. The above application platform may be a cloud server, a related application, and the like, which will not be limited herein.

Therefore, after obtaining the first device identifier of the first device, the verification request message carrying the first device identifier is sent to the preset application platform, such that the application platform may match the pre-stored registration information with the first device identifier to verify the legitimacy of the corresponding device with the first device identifier.

At block S340, if the verification result fed back by the application platform represents that the device corresponding to the first device identifier is legal, the networking response message carrying the first device identifier is sent from the target channel to the first device to enable the first device to connect with the target router via the target channel according to the service set identifier and the password, in which, the networking response message includes the service set identifier and the password of the target router.

Specifically, if the application platform successfully matches the pre-stored registration information with the first device identifier, the device corresponding to the first device identifier is a legal device.

Therefore, the networking response message carrying the first device identifier is sent from the target channel to the first device to enable the first device to connect with the target router via the target channel according to the service set identifier and the password, in which, the networking response message includes the service set identifier and the password of the target router.

At block S350, if the verification result fed back by the application platform represents that the device corresponding to the first device identifier is illegal, the networking response message carrying the first device identifier is not sent from the target channel to the first device.

Specifically, if the application platform fails to match the pre-stored registration information with the first device identifier, the device corresponding to the first device identifier is an illegal device.

Therefore, in order to ensure the network security of the target router, the second device does not send the networking response message carrying the first device identifier from the target channel to the first device.

In conclusion, with the device networking method according to embodiments of the present disclosure, before sending the networking response message carrying the first device identifier from the target channel to the first device, the verification request message with the first device identifier is sent to the preset application platform, such that the application platform may verify the legitimacy of the corresponding device carrying the first device identifier according to the pre-stored registration information, and only when the device corresponding to the first device identifier is legal, the networking response message carrying the first device identifier is sent to the first device from the target channel, thereby avoiding the waste of resources, improving the efficiency of network and protecting the network security of the router.

In order to achieve the above embodiments, the present disclosure also proposes a device networking apparatus. Fig. 4 is a block diagram of a device networking apparatus according to an embodiment of the present disclosure. As illustrated in Fig. 4, the device networking apparatus includes a first sending module 110, an acquiring module 120, a responding module 130.

The first sending module 110 is configured to monitor each pre-set channel, and to send a networking request message of a first device to be connected to a target router in each channel, in which the networking request message comprises a first device identifier of the first device.

The acquiring module 120 is configured to acquire, from a target channel, a networking response message carrying the first device identifier and sent by a second device connected to the target router, in which the networking response message comprises a service set identifier and a password of the target router.

The responding module 130 is configured to send a receiving reply message to the second device, and to control the first device to be connected to the target router via the target channel according to the service set identifier and the password.

In an embodiment of the present disclosure, the first sending module 110 is configured to monitor each channel for a duration T, and send the networking request message of the first device to be connected to the target router in each channel N times within the duration T.

It should be noted that, the explanation of embodiment of the device networking method described with reference to Fig. 1 also applies to the device networking apparatus of embodiments of the present disclosure. The explanation of embodiments of the device networking apparatus of the present disclosure is not elaborated herein.

In conclusion, with the device networking apparatus according to embodiments of the present disclosure, each pre-set channel is monitored, and a networking request message of a first device to be connected to a target router is sent in each channel, in which the networking request message includes a first device identifier of the first device, and a networking response message carrying the first device identifier and sent by a second device connected to the target router is acquired from a target channel, in which the networking response message includes a service set identifier and a password of the target router, and a receiving reply message is sent to the second device, and the first device is controlled to be connected to the target router via the target channel according to the service set identifier and the password. Therefore, the service set identifier and the password of the relevant router are acquired from the device that has been connected to the relevant server, thereby improving the efficiency of the device networking.

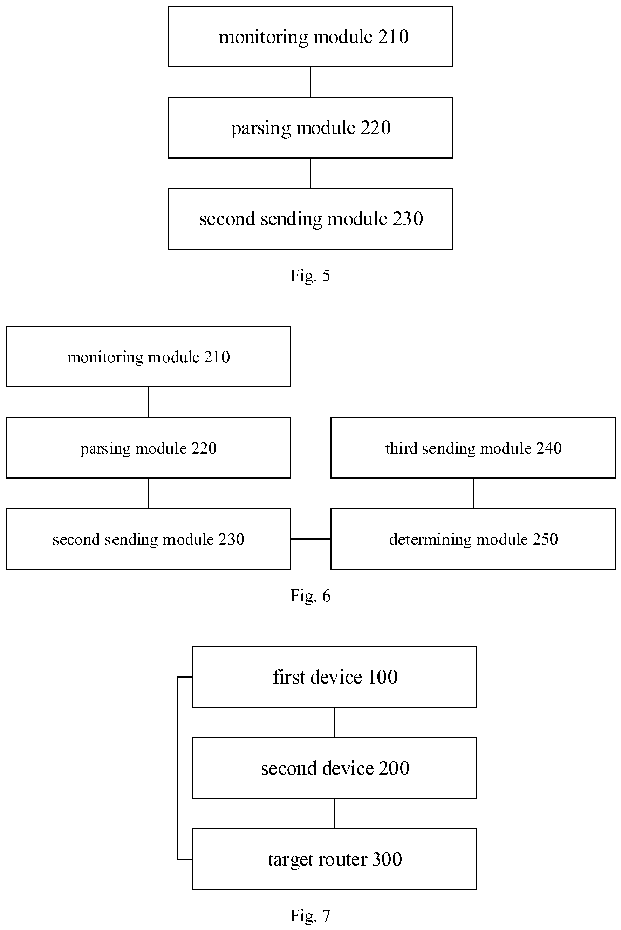

In order to achieve the above embodiments, the present disclosure also proposes a device networking apparatus. Fig. 5 is a block diagram of a device networking apparatus according to another embodiment of the present disclosure. As illustrated in Fig. 5, the device networking apparatus includes a monitoring module 210, a parsing module 220 and a second sending module 230.

In which, the monitoring module 210 is configured to monitor, after a second device is connected to the target router via a target channel, whether a networking request message sent by a first device to be connected to the target router is obtained from the target channel.

The parsing module 220 is configured to parse, if the networking request message is obtained from the target channel, the networking request message and obtain a first device identifier of the first device.

The second sending module 230 is configured to send a networking response message carrying the first device identifier to the first device from the target channel, in which the networking response message includes: a service set identifier and a password of the target router, such that the first device is caused to be connected to the target router via the target channel according to the service set identifier and the password.

In an embodiment of the present disclosure, the second sending module 230 is configured to send the networking response message carrying the first device identifier to the first device from the target channel according to a preset period, and to stop sending the networking response message until the receiving reply message sent by the first device is received.

It should be noted that, the explanation of embodiment of the device networking method described with reference to Fig. 2 also applies to the device networking apparatus of embodiments of the present disclosure. The explanation of embodiments of the device networking apparatus of the present disclosure is not elaborated herein.

In conclusion, with the device networking apparatus according to embodiments of the present disclosure, after a second device is connected to a target router via a target channel, it is monitored whether a networking request message sent by a first device to be connected to the target router is obtained from the target channel, if the networking request message is obtained from the target channel, the networking request message is parsed and the first device identifier of the first device is acquired, and the networking response message carrying the first device identifier is set to the first device from the target channel, in which the networking response message includes the service set identifier and the password of the target router, such that the first device is caused to be connected to the target router via the target channel according to the service set identifier and the password. Therefore, the service set identifier and the password of the relevant router may be sent to the device to be networked based on the device that has been connected to the relevant server, thereby improving the efficiency of the device networking.

Fig. 6 is a block diagram of a device networking apparatus according to yet another embodiment of the present disclosure. As illustrated in Fig. 6, based on Fig. 5, the device networking apparatus further includes a third sending module 240 and a determining module 250.

The third sending module 240 is configured to send a verification request message carrying the first device identifier to a preset application platform, such that the application platform is caused to verify the legitimacy of the device corresponding to the first device identifier according to pre-stored registration information.

The determining module 250 is configured to determine whether to send the networking response message carrying the first device identifier from the target channel to the first device according to a verification result fed back by the application platform.

It should be noted that, the explanation of embodiments of the device networking method described with reference to Fig. 3 also applies to the device networking apparatus of embodiments of the present disclosure. The explanation of embodiments of the device networking apparatus of the present disclosure is not elaborated herein.

In conclusion, with the device networking apparatus according to embodiments of the present disclosure, before sending the networking response message carrying the first device identifier from the target channel to the first device, the verification request message with the first device identifier is sent to the preset application platform, such that the application platform may verify the legitimacy of the corresponding device carrying the first device identifier according to the pre-stored registration information, and only when the device corresponding to the first device identifier is legal, the networking response message carrying the first device identifier is sent to the first device from the target channel, thereby avoiding the waste of resources, improving the efficiency of network and protecting the network security of the router.

In order to achieve the above embodiment, the present disclosure also proposes a device networking system. Fig. 7 is a block diagram of a device networking system according to an embodiment of the present disclosure. As illustrated in Fig. 7, the device networking system includes a first device 100, a second device 200 and a target router 300.

The first device 100 includes the device networking apparatus in the embodiment described with reference to Fig. 4, and the device networking apparatus described with reference to Fig. 4 is also applicable to the first device 100 of embodiments of the present disclosure, which will not be elaborated herein. The second device 200 includes the device networking apparatuses in the embodiments described with reference to Fig. 5 and Fig. 6, and the device networking apparatuses described with reference to Fig. 5 and Fig. 6 are also applicable to the second device 200 of embodiments of the present disclosure, which will not be elaborated herein.

In order to describe the device networking system of embodiments of the present disclosure more clearly, the implementation of the device networking system of embodiments of the present disclosure is described in combination with the specific application scenario diagram below.

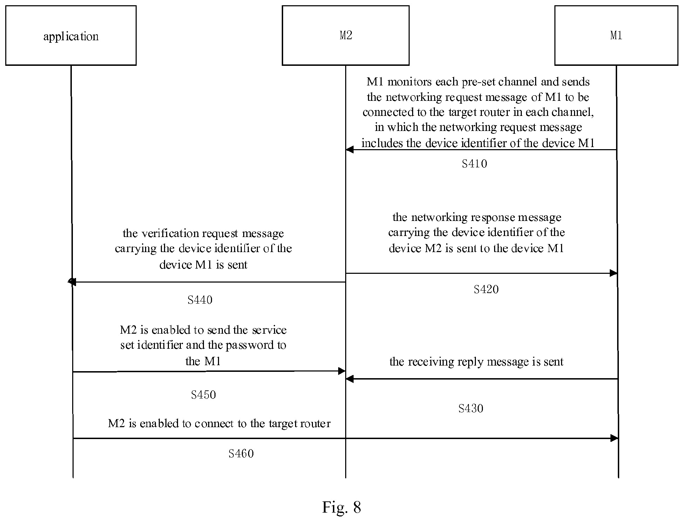

Fig. 8 is a flow chart of an implementation of a device networking system according to an embodiment of the present disclosure. In Fig. 8, M1 represents a first device, M2 represents a second device.

In the implementation of device networking, M1 monitors each pre-set channel and sends a networking request message of M1 to be connected to the target router in each channel, in which the networking request message includes the device identifier of the device M1 (S410).

At the same time, after the device M2 is connected to the target router via the target channel, it is monitored whether the networking request message sent by the M1 device to be connected to the target router is obtained from the target channel.

If the device M2 obtains the networking request message from the target channel, the networking request message is parsed and the device identifier of the device M1 is obtained, and the networking response message carrying the device identifier of the device M2 is sent to the device M1 from the target channel, in which, the networking response message includes the service set identifier and the password of the target router (S420).

Furthermore, the device M1 obtains the networking response message carrying the device identifier of the device M2 sent by the device M2 connected to the target router from the target channel, the received reply message is sent to the device M2, and the device M1 is controlled to be connected with the target router via the target channel according to the service set identifier and the password (S430).

In another embodiment of the present disclosure, the legitimacy of the device M1 may also need to be verified before the device M2 sends the networking response message carrying the device identifier of the device M1 from the target channel to the device M1. For example, the following application platform is used to verify the legitimacy of the device M1 as the relevant application, please refer to Fig. 8.

Before the device M2 sends the networking response message carrying the device identifier of the device M1 from the target channel to the device M1, the verification request message carrying the device identifier of the device M1 is sent to the relevant application to verify the legitimacy of the device M1 according to the pre-stored registration information (S440).

Further, if the result of the verification of the relevant application represents that the device M1 is legal, the service set identifier and the password indicating that the target router from the target channel is enabled to be sent to the device M1 (S450), at the same time, the device M1 is allowed to connect to the target router when it is legal (S460).

It should be noted that, the steps in Fig. 8 are labeled only for the convenience of illustrating the work flow of the device networking system, which should not be understood as limitations of orders.

In order to further describe the working process of the device networking system of embodiments of the present disclosure, the following is illustrated by combining the byte structure of the data frame in the interactive information in the work flow illustrated in Fig. 8.

Each device which is not networked may send a control frame as well as a management frame, in which the management frame may include a beacon frame, a search request frame, a search reply frame, and the like.

As illustrated in Fig. 1, multiple IEs (Information Element) may be included in the frame content of each management frame. Each IE may include an ID (ie_id) of the information element, a length (Len) of the information element, and a content (Oui)of the information element.

In the embodiment, when the ID of the information element is 221, the content of the information element may be further divided into three parts: Oui, Oui_type, and Data, in which, the Oui is a registration identifier of the device.

The Data segment contains the content to be transmitted by the corresponding information element, and may contain an SN (sequence Number), a device type and other device identifier information of the corresponding device.

**Table 1**

| parameter | content |
|---|---|
| ie_id | 221 |
| Len | Max length (255-4) |
| Oui | 38-21-87 |
| oui_type | 01 |
| Data | The length depends on the Len parameter |

Specifically, as illustrated in Fig. 2, the device M1 may carry the networking request message by exploring the information elements such as a request frame, which is illustrated in the gray area in Table 2 below. In the search request frame of the device M1, the device type of the M1 device can be carried by a device type segment, a sequence code for the device M1 can be carried by a SN segment, and the like.

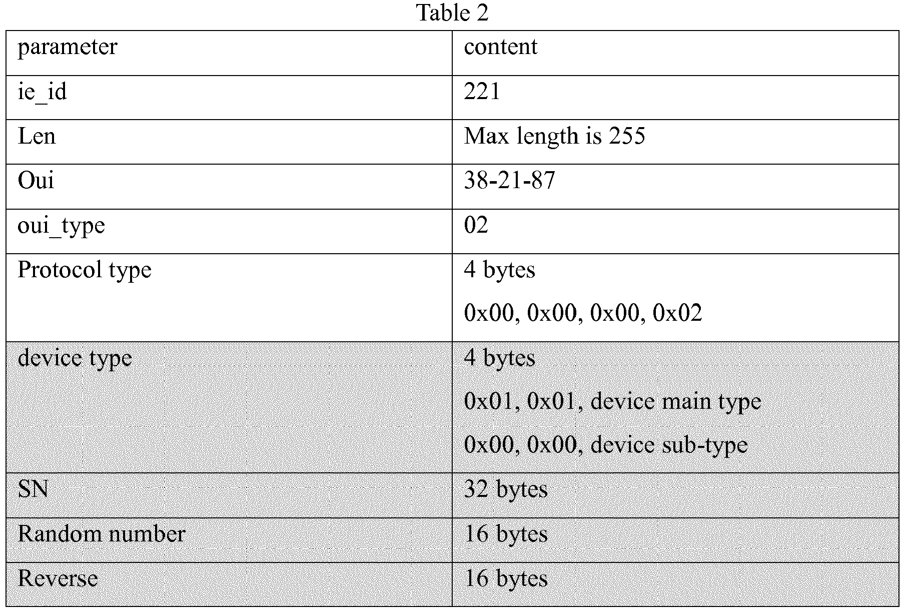

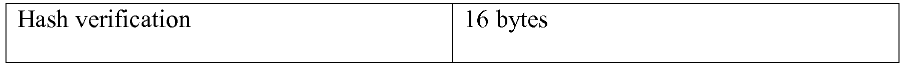

As illustrated in Table 3, in act at block S420, the device M2 may carry the networking response message by exploring the information element of the response frame, which is illustrated in the gray area in Table 3 below. In the search response frame sent by the device M2, the service set identifier of the target router may be carried by a Ssid segment, and the password of the target router can be carried by a password segment.

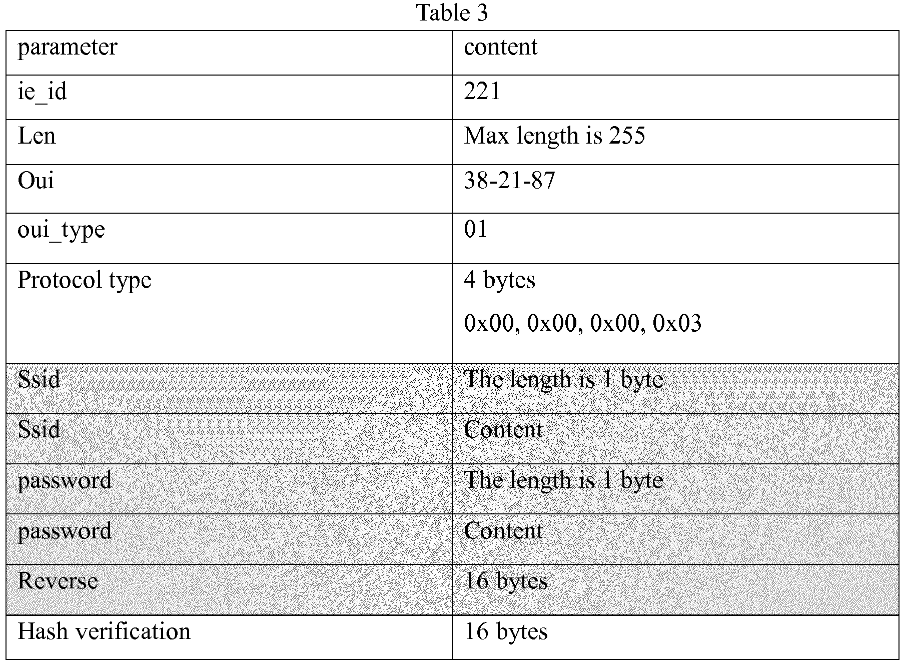

As illustrated in Fig. 4, in the above act at block S430, the device M1 may carry the receiving reply message by searching another information element of the reply frame, which is illustrated in the gray area in Table 4 below, it may be determined whether the device M1 receives the networking response message sent by the M2 device is carried in a determining segment.

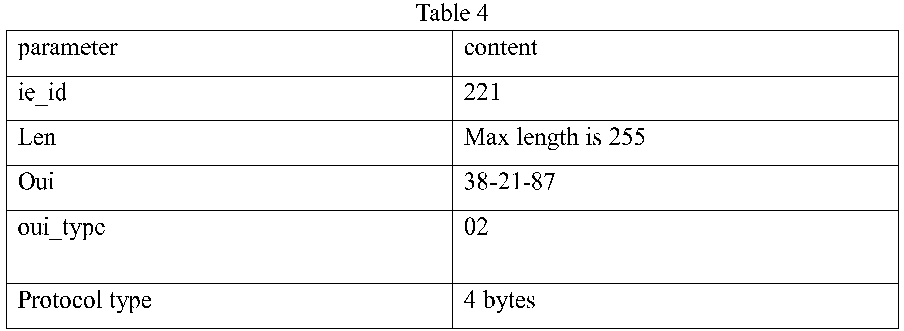

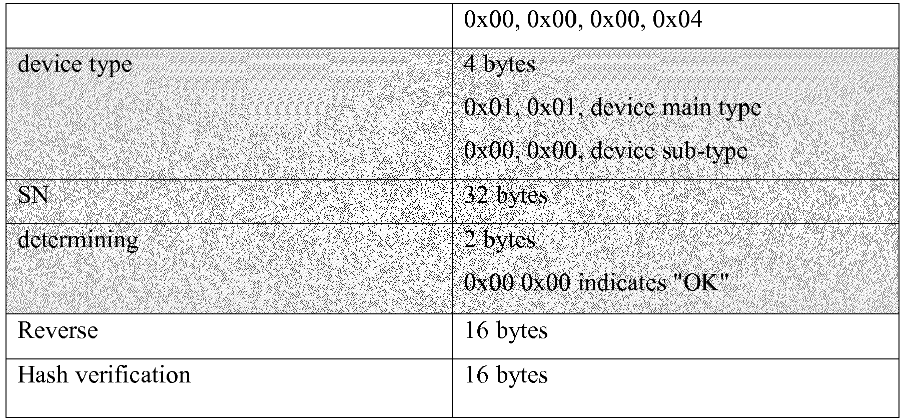

It should be noted that, the above explanation of the device networking method also applies to the description of the device networking system of embodiments of the present disclosure.

In conclusion, with the device networking system of embodiments of the present disclosure, the second device monitors each pre-set channel, and sends a networking request message of a first device to be connected to a target router in each channel, in which the networking request message includes a first device identifier of the first device, and acquires, from a target channel, a networking response message carrying the first device identifier and sent by a second device connected to the target router, in which the networking response message includes a service set identifier and a password of the target router, and sends a received reply message to the second device, and controls the first device to be connected to the target router via the target channel according to the service set identifier and the password. Therefore, the system obtains the service set identifier and the password of the relevant router from the device that has been connected to the relevant server, improving the efficiency of the device networking.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although embodiments of present disclosure have been shown and described above, it should be understood that above embodiments are just explanatory, and cannot be construed to limit the present disclosure, for those skilled in the art, changes, modifications, alternatives, and variations can be made to the embodiments within the scope of the present disclosure.

## Claims

1. A device networking method, comprising:
monitoring each pre-set channel, and sending a networking request message of a first device to be connected to a target router in each channel, wherein the networking request message comprises a first device identifier of the first device;
acquiring, from a target channel, a networking response message carrying the first device identifier and sent by a second device connected to the target router, wherein the networking response message comprises a service set identifier and a password of the target router; and
sending a receiving reply message to the second device, and controlling the first device to be connected to the target router via the target channel according to the service set identifier and the password.

2. The method according to claim 1, wherein monitoring each pre-set channel, and sending the networking request message of the first device to be connected to the target router in each channel comprises:
monitoring each channel for a duration T, and sending the networking request message of the first device to be connected to the target router in each channel N times within the duration T.

3. A device networking method, comprising:
after a second device is connected to a target router via a target channel, monitoring whether a networking request message sent by a first device to be connected to the target router is acquired from the target channel;
if the networking request message is acquired from the target channel, parsing the networking request message and acquiring a first device identifier of the first device;
sending a networking response message carrying the first device identifier to the first device from the target channel, wherein the networking response message comprises: a service set identifier and a password of the target router, such that the first device is caused to be connected to the target router via the target channel according to the service set identifier and the password.

4. The method according to claim 3, wherein sending the networking response message carrying the first device identifier to the first device from the target channel comprises:
sending the networking response message carrying the first device identifier to the first device from the target channel according to a preset period, and stopping sending the networking response message until a receiving reply message sent by the first device is received.

5. The method according to claim 3, wherein before sending the networking response message carrying the first device identifier to the first device from the target channel, the method further comprises:
sending a verification request message carrying the first device identifier to a preset application platform, such that the application platform is caused to verify legitimacy of a device corresponding to the first device identifier according to pre-stored registration information; and
determining whether to send the networking response message carrying the first device identifier from the target channel to the first device according to a verification result fed back by the application platform.

6. A device networking apparatus, comprising:
a first sending module, configured to monitor each pre-set channel, and to send a networking request message of a first device to be connected to a target router in each channel, wherein the networking request message comprises a first device identifier of the first device;
an acquiring module, configured to acquire, from a target channel, a networking response message carrying the first device identifier and sent by a second device connected to the target router, wherein the networking response message comprises a service set identifier and a password of the target router; and
a responding module, configured to send a receiving reply message to the second device, and to control the first device to be connected to the target router via the target channel according to the service set identifier and the password.

7. The apparatus according to claim 6, wherein the first sending module is configured to:
monitor each channel for a duration T, and send the networking request message of the first device to be connected to the target router in each channel N times within the duration T.

8. A device networking apparatus, comprising:
a monitoring module, configured to monitor, after a second device is connected to a target router via a target channel, whether a networking request message sent by a first device to be connected to the target router is acquired from the target channel;
a parsing module, configured to parse, if the networking request message is acquired from the target channel, the networking request message and to acquire a first device identifier of the first device; and
a second sending module, configured to send a networking response message carrying the first device identifier to the first device from the target channel, wherein the networking response message comprises: a service set identifier and a password of the target router, such that the first device is caused to be connected to the target router via the target channel according to the service set identifier and the password.

9. The apparatus according to claim 8, wherein the second sending module is configured to send the networking response message carrying the first device identifier to the first device from the target channel according to a preset period, and to stop sending the networking response message until a receiving reply message sent by the first device is received.

10. The apparatus according to claim 8, further comprising:
a third sending module, configured to send a verification request message carrying the first device identifier to a preset application platform, such that the application platform is caused to verify legitimacy of a device corresponding to the first device identifier according to pre-stored registration information; and
a determining module, configured to determine whether to send the networking response message carrying the first device identifier from the target channel to the first device according to a verification result fed back by the application platform.

11. A device networking system, comprising:
a first device, comprising the device networking apparatus according to any of claims 6 to 7;
a second device, comprising the device networking apparatus according to any of claims 8 to 10; and
a target router.
